# EUROPEAN PATENT APPLICATION

(11) **EP 0 813 261 A2**
(43) Date of publication of application: **17.12.1997**
(21) Application number: 97108055.1
(22) Date of filing: 16.05.1997
(51) Int. Cl.: H01M 4/70

(54) **Metal sheet for electrode substrate of battery can**

(30) Priority: 17.05.1996 JP 123622/96; 04.09.1996 JP 234364/96
(71) Applicant: KATAYAMA SPECIAL INDUSTRIES, LTD., Osaka-shi, Osaka-fu (JP)
(72) Inventor: Sugikawa, Hirofumi, Toyonaka-shi, Osaka-fu (JP)
(74) Representative: Wiebusch, Manfred

(57) **Abstract**

A metal sheet to be used as an electrode substrate of a battery comprising a porous metal base sheet (1) or a solid metal base sheet which is deformed upward and downward at predetermined intervals with respect to a reference plane to form a plurality of conic, quadrangular pyramidal or wave-shaped upward and downward projections (2, 3) having a large number of pores positioned on faces thereof. An active substance is filled into spaces surrounded by the upward and downward projections and is held by these projections.

## Description

### BACKGROUND OF THE INVENTION

### Field of the Invention

The present invention relates to a metal sheet which is used as an electrode substrate of a battery and to a battery electrode in general. More particularly, the present invention relates to a metal sheet which is used preferably as an electrode substrate of a battery for use in an electric car and which has a great thickness to allow a great amount of an active substance to be applied thereto and allow the metal sheet to be in close contact with the active substance applied thereto, so that the active substance is prevented from being removed or dropped from the electrode substrate.

### Description of the Related Art

Heretofore, as the electrode substrate comprising a positive plate and a negative plate of a nickel/hydrogen battery, a nickel/cadmium battery or the like, principally, a nickel-plated steel plate (hereinafter referred to as punching metal) having punched pores is used. An active substance is applied to the punching metal to form the electrode plate. In the case of a cylindrical battery, the electrode plate comprising belt-shaped positive and negative electrodes is wound spirally with interposition of a separator so that it can be accommodated in the battery. In the case of a rectangular or square battery, positive and negative electrodes are layered on each other with interposition of a separator to be accommodated in the battery.

The punching metal is formed as follows: A flat cold-drawn steel plate having a thickness of 60µm - 100µm is punched in a required pattern to form thereon circular pores, the diameter of which is 1.0mm - 2.5mm such that the open area percentage thereof is 40% - 50%. The steel plate is then nickel-plated so that it is resistant to corrosion. The punching metal thus formed is used as the electrode substrate of the battery.

As the electrode substrate consisting of positive and negative plates of a lithium primary battery, mainly, a metal plate made of such as SUS (steel use stainless), Ti or the like is used. The metal plate is processed into a lath to which an active substance is applied to form an electrode plate. In a lithium secondary battery, an active substance is applied in a required thickness to both surfaces of a core material made of an aluminum foil to form a positive plate, whereas an active substance is applied in a required thickness to both surfaces of a core material made of a copper foil to form a negative plate.

As the substrate of an air electrode to be used as the positive electrode of an air zinc battery, mainly, a metal screen (nickel-plated SUS (steel use stainless) mesh) is used. As a zinc storage battery with attracts public attention recently as a car battery, a cast lattice or an expanded lattice consisting of lead alloy (Pb/Sb alloy, Pb/Ca alloy, Pb/Ca/Sn alloy or the like) is used. An active substance is applied to the metal screen and the lattice to form the electrode plate of the lead storage battery.

Further, in recent years, porous metal sheets are used as the electrode substrate of the nickel/hydrogen battery, the nickel/cadmium battery, and the lithium primary battery. The porous metal sheets are formed as follows: Foamed sheet, nonwoven sheet or mesh sheet, all made of resin are chemically plated to make them electrically conductive, and then electroplated. Then, they are removed for resin removal and sintering.

Any of the above-described electrode substrates of the batteries are flat. An active substance is applied to both surfaces of each electrode substrate to fill it into pores formed thereon and coat both surfaces thereof in a required thickness. The above-described punching metal, the lath, and the metal screen are not three-dimensional and are weak in contact strength with the active substance, thus being incapable of holding the active substance thereon with a strong force. If the electrode substrate has large pores formed thereon, the active substance separates and drops therefrom during the manufacture or use thereof. It is possible to add a large amount of binder to the active substance to prevent it from separating and dropping from the electrode substrate. But this method deteriorates the reactivity of the active substance, thus degrading the battery characteristic.

The above-described porous foamed metal sheet having a three-dimensional structure holds the active substance thereon with a higher force than the punching metal, the metal screen and the like, because the active substance is filled into the three-dimensional pores formed on the porous metal sheet. But the skeleton of the foamed porous metal sheet surrounding the pores is not thick. Thus, the foamed porous metal sheet has a low electricity-collecting performance. Accordingly, the electrode substrate made of the foamed porous metal sheet is incapable of charging and discharging a battery rapidly.

Because any of the conventional electrode substrates is thin, the active substance is thinly applied thereto in the thickness direction thereof. Therefore, the electrode has a low electrical conductivity in its thickness direction, thus being incapable of enhancing the characteristic of the battery.

In order to solve this problem, as disclosed in Laid-Open Japanese Patent Publications Nos. 7-130370 and 7-335208, when a metal plate or a metal foil is punched, a burr having a thickness almost equal to that of the metal plate or the metal foil is intentionally formed in the periphery of each pore so that an apparent thickness of a formed electrode substrate is twice as great as that of the metal plate or the metal foil. In forming the pore by punching the metal plate or the metal foil, the open area percentage is low. Thus, the amount and height of the burr formed in the periphery of the pore are not so great relative to the thickness of the metal plate or the metal foil. That is, the electrode substrate is incapable of holding an active substance thereon as desired, thus not solving the above-described problem of the removal of the active substance therefrom. When the metal plate or the metal foil is punched by a pair of upper and lower dies, the maximum open area percentage is about 50%. Therefore, even though the burr is formed in the periphery of each pore, the occupation percentage of the burr is low. Further, the height of the burr is almost equal to the thickness of the metal plate or the metal foil. Thus, the burr is incapable of holding the active substance sufficiently. In addition, because the apparent thickness of the electrode substrate including the burr is twice as great as the thickness of the metal plate or the metal foil, the thickness of the active substance which can be applied to the electrode substrate is about twice as great as that of the active substance applied to the conventional metal plate or the conventional metal foil. Thus, the electrode substrate proposed in Laid-Open Japanese Patent Publications Nos. 7-130370 and 7-335208 is incapable of enhancing the battery characteristic.

### SUMMARY OF THE INVENTION

The present invention has been made in view of the above-described problems. It is accordingly an object of the present invention to provide an electrode substrate of a battery which holds an active substance thereon firmly and allows a large amount of the active substance to be applied thereto in the thickness direction thereof and provide a battery electrode comprising the electrode substrate.

In order to solve the above-described problems, there is provided a metal sheet to be used as an electrode substrate of a battery comprising a porous metal base sheet which is deformed upward and downward at predetermined intervals with respect to a reference plane to form a plurality of upward and downward projections conic, quadrangular pyramidal or wave-shaped having a large number of pores positioned on faces thereof to use spaces surrounded by the upward and downward projections as active substance-application spaces.

The upward and downward projections are formed by pressing the flat porous metal base sheet placed between a pair of upper and lower dies. Alternatively the flat porous metal base sheet is inserted between a pair of rollers having concave and convex portions formed thereon to form the upward and downward projections. The porous metal sheet may consist of a single layer or a plurality of layers. The open area percentage of the flat porous metal base sheet is set to 10 to 99%.

The apparent thickness of the porous metal sheet is allowed to be more than twice as great as the thickness of the conventional electrode substrate, because the porous metal sheet is not flat but has the upward and downward projections formed thereon. Therefore, the active substance can be applied in a great thickness to the active substance-application spaces surrounded by the upward and downward projections. Further, because the active substance-application spaces are conic, quadrangular pyramidal or wave-shaped, the active substance can be held therein very firmly. In addition, because a large number of pores is formed on the faces of the upward and downward projections, the active substance is filled into the pores and can be reliably held in the active substance-application spaces. Thus, the active substance can be prevented from being separated or removed from the active substance-application spaces.

Preferably, a plurality of porous metal sheets is piled vertically one upon another, with apexes of the upward and downward projections uncoincident with each other to use spaces between porous metal sheets vertically adjacent to each other as active substance-application spaces.

When the porous metal sheets are piled vertically by spacing the upward and downward projections at intervals of less than 1 mm, it is difficult to make the apexes of the upward and downward projections coincident with each other. Therefore, the porous metal sheets are piled vertically with the apexes uncoincident with each other, thus forming the active substance-application spaces between the upward and downward projections.

When the apexes of the upward projections of the lower porous metal sheet are coincident with those of the downward projections of the upper porous metal sheet, each of the active substance-application spaces has a maximum volume, and the metal sheet comprising the porous metal sheets piled one upon another has a maximum height, thus providing an electrode substrate having a great thickness.

The active substance-application spaces formed between the upward and downward projections piled one upon another thereon hold the active substance firmly. In addition, this construction increases the amount of the active substance to be filled into the active substance-application spaces. Moreover, in this construction, the thickness of the electrode substrate can be easily adjusted by piling up a required number of the porous metal sheets one upon another.

Preferably, an upper flat porous metal sheet is placed on the apexes of the upward projections of the porous metal sheet and a lower flat porous metal sheet is placed under the apexes of the downward projections thereof to use spaces between the porous metal sheet and the upper flat porous metal sheet as well as the lower flat porous metal sheet as active substance-application spaces. That is, the metal sheet is in the shape of a corrugated fiberboard. Because the open parts of active substance-application spaces formed of the upward and downward projections are closed with the upper and lower flat porous metal sheets, the active substance applied to the active substance-application spaces can be held therein very firmly.

The porous metal base sheet is preferably bent upward and downward alternately, with the projections directed in a right-to-left direction to use spaces surrounded with the projections as active substance-application spaces. That is, in this construction, a plurality of porous metal base sheet is not used, but only one porous metal base sheet having projections formed thereon is bent to provide a three-dimensional metal sheet having a desired thickness. An electrode substrate having a desired thickness can be easily obtained by bending the porous metal base sheet having the projections formed thereon.

The porous metal base sheet is preferably formed by rolling metal powders into a sheet. The porous metal base sheet proposed by the present applicant and disclosed in Laid-Open Japanese Patent Publication No. 8-122534 can be preferably used. The porous metal base sheet is formed as follows: Metal powders are supplied to the peripheral surface of a pattern roller, on which a pattern consisting of a large number of concavities has been formed. The pattern roller is one of two rollers arranged as a pair of rollers. The metal powders are dropped to the concavities and accumulated on the peripheral surface of the pattern roller except in the concavities. Then, the metal powders accumulated on the peripheral surface of the pattern roller are directly rolled by rotating a pair of the rollers. The following metal sheets can be preferably used as the porous metal base sheet of the present invention by deforming upward and downward: (1) a metal plate or a metal foil having a large number of pores formed thereon; (2) a metal mesh or a metal screen; (3) porous metal sheets formed by plating, evaporating, applying metal powder or spreading melted metal to a three-dimensional reticulate foamed resin sheet, porous fibrous resin sheet, a mesh resin sheet or a piled sheet consisting of one or more kinds of those sheet; (4) and a porous metal sheet consisting of metal fibers.

The porous metal material consisting of metal fibers was proposed by the present applicant and disclosed in Laid-Open Japanese Patent Publication 7-295737. Metal fibers are intertwiningly joined with each other to form skeletons surrounding pores, thus constituting a porous fibrous structure or a three-dimensional reticulate structure. The metal fibers are formed by bundling drawing method, metal fiber-spinning method, metal foil-cutting method, by cutting a metal bar or a metal foil coil, using chattering vibration cutting method.

The porous metal base sheet has pores punched pore-shaped, reticulate, honeycomb-shaped, lath-shaped, lattice-shaped, expanded sheet-shaped, screen-shaped or lace-shaped.

Further, in the present invention, there is provided a metal sheet to be used as an electrode substrate of a battery comprising not the porous metal sheet but a solid metal material or a solid metal foil which is deformed upward and downward at predetermined intervals with respect to a reference plane to form a plurality of upward and downward projections conic, quadrangular pyramidal or wave-shaped.
The unporous metal sheet can be preferably used as a sheet of the electrode substrate of a lithium secondary battery.

A metal sheet is preferably layered laminated on at least one of both surfaces of the solid metal sheet member which is used as a core sheet. For example, a foamed porous metal sheet member is layered on both surfaces of a solid metal foil and integrated therewith, and the integrated sheet is passed through a pair of press dies or a pair of rollers to form upward and downward projections thereon. Because an active substance is filled into pores of the foamed porous metal sheet member, the active substance can be held firmly on the solid metal foil and the apparent thickness thereof becomes great. Thus, the active substance can be thickly applied to the solid metal foil.

Substances to compose the metal sheet are selected from Ni, Al, CU, Fe, Ag, Zn, Sn, Pb, Sb, Ti, In, V, Cr, Co, C, Ca, Mo, Au, P, W, Rh, Mn, B, Si Ge, Se, Ln, Ga, Ir, and an alloy or a mixture of two or more of the substances.

The upward and downward projections are preferably continuous with each other; and the downward projections project from lower ends of the upward projections without forming a flat reference plane between the upward and downward projections. This configuration allows one downward projection conic or quadrangular pyramidal to be surrounded with upward projections continuous with the upper end of the downward projection. Thus, the apparent height of one active substance-application space is the addition of one downward projection and one upward projection. The active substance-application space has an increased volume, thus increasing the filling amount of the active substance and increasing the performance of a battery.

The apparent thickness of the metal sheet measured between the upper ends of the upward projections and the lower ends of the downward projections is 3 - 500 times as great as the thickness of a porous metal base sheet or a solid metal base sheet. The apparent thickness of the metal sheet is in a range of 0.03mm to 5.0mm.

This configuration allows the apparent thickness of the metal sheet to be increased to a desired one in the range of 3 - 500 times as great as the thickness of the porous metal base sheet or the solid metal base sheet. For example, a metal foil having a thickness of 10 µm can be increased to 5mm owing to the addition of the apparent height of the upward and downward projections formed by deforming the metal foil. Therefore, the amount of the active substance which is applied to the active substance-application space surrounded with the upward and downward projections is increased to several hundred times as great as that of the active substance which is applied to a projection-unprovided active substance-application space. Owing to the increased thickness of the active substance, the metal sheet has an improved electricity-collecting performance. Thus an electrode substrate comprising the active substance is capable of charging and discharging a battery rapidly.

Each of the upward and downward projections conic or quadrangular pyramidal becomes thinner toward a leading end thereof; each of the upward projections is thickest at a reference side of the metal sheet at which the lower end thereof is located; and each of the downward projections is thickest at the reference side of the metal sheet at which the upper end thereof is located. The metal sheet thickest at the reference side maintains its strength. Further, because the metal sheet becomes thinner toward the leading end thereof, the height of the upward and downward projections can be increased, i.e., the apparent height of the metal sheet can be increased. Thus, a great amount of the active substance can be filled into the active substance-application space.

Furthermore, there is provided a battery electrode, comprising the metal sheet described, in which an active substance is filled into a space surrounded with the upward and downward projections.

In the electrode, because the active substance-application space conic, quadrangular pyramidal or wave-shaped is surrounded with the upward and downward projections, a greater amount of the active substance can be filled thereinto and held therein firmly. Further, because the electrode substrate is porous and the projections have pores formed on the face thereof the active substance is filled into the pores and is not readily separated and dropped from the electrode substrate.

The active substance may contain an electrically conductive material. With the increase in the volume of the active substance-application space surrounded with the upward and downward projections, the filling amount of the active substance increases. Since the active substance as such is not electrically conductive, preferably, the electrically conductive material is added to the active substance, when the volume of the active substance-application space is great and hence would have a low electrical conductivity.

Further, there is provided a battery comprising the battery electrode above-mentioned. Because the electrode is thick and contains much amount of an active substance, it is preferably used as the power battery of an electric car.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a plan view showing a metal sheet according to a first embodiment of the present invention;
Fig. 2A is a sectional view, showing the metal sheet shown in Fig. 1, taken along a line A-A in Fig. 1;
Fig. 2B is a sectional view, showing the metal sheet shown in Fig. 1, taken along a line B-B in Fig. 1;
Fig. 2C is a sectional view, showing the metal sheet shown in Fig. 1, taken along a line C-C in Fig. 1;
Figs. 3A and 3B are schematic views each showing the process of manufacturing (he metal sheet shown in Fig. 1;
Figs. 4A and 4B are sectional views each showing a state in which an active substance is applied to the metal sheet shown in Fig. 1;
Fig. 5A is a front view showing a roller for forming a porous metal material to be used as a base material of the metal sheet shown in Fig. 1;
Fig. 5B is a sectional view showing a main portion of the roller shown in Fig. 5A;
Fig. 6 is a block diagram showing the process of manufacturing the porous metal material;
Fig. 7 is a plan view showing the manufactured porous metal material;
Figs. 8A and 8B are views showing the operation of the roller shown in Fig. 5;
Fig. 9A is a perspective view showing a metal sheet according to a second embodiment of the present invention;
Fig. 9B is a perspective view showing a porous metal material sandwiched between upper and lower porous metal materials shown in Fig. 9A:
Fig. 9C is a sectional view showing a state in which an active substance is applied to the metal sheet shown in Fig. 9A;
Figs. 10A and 10B are schematic front views each showing a metal sheet according to a third embodiment of the present invention;
Fig. 11A is a schematic front view showing a metal sheet according to a fourth embodiment of the present invention;
Fig. 11B is a schematic perspective view showing the metal sheet shown in Fig. 11A;
Fig. 12 is a schematic front view showing a modification of the metal sheet according to the fourth embodiment of the present invention;
Fig. 13 is a schematic front view showing another modification of the metal sheet according to the fourth embodiment of the present invention;
Fig. 14 is a sectional view showing a metal sheet according to a fifth embodiment of the present invention;
Fig. 15 is a sectional view showing a metal sheet according to a sixth embodiment of the present invention; and
Fig. 16 is a schematic plan view showing a metal sheet according to a seventh embodiment of the present invention.

### DESCRIPTION OF THE PREFERRED EMBODIMENTS

The embodiments of the present invention will be described below with reference to the drawings.

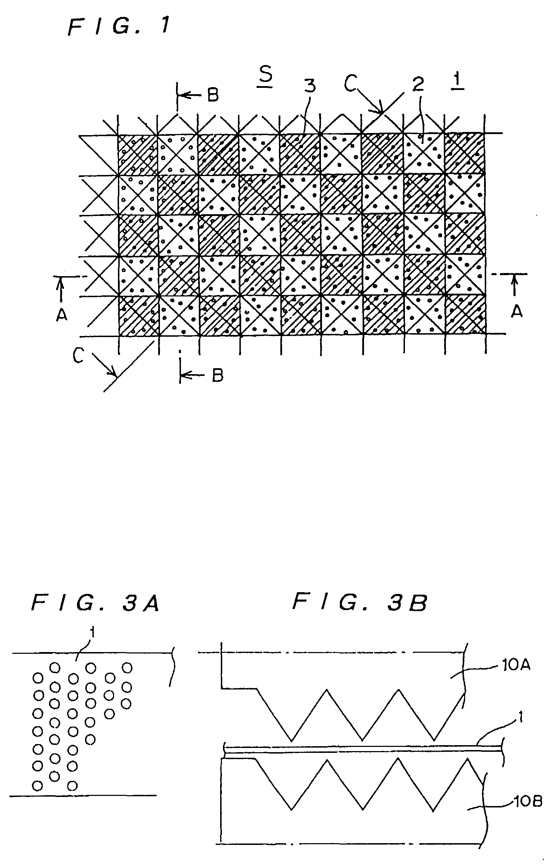

Figs. 1 through 8 show the first embodiment of the present invention. A metal sheet (S) of the first embodiment comprises a porous metal base sheet 1 having a large number of circular pores formed therein in a certain pattern. Quadrangular pyramidal upward projections 2 and quadrangular pyramidal downward projections 3 are formed on the porous metal base sheet 1 such that the upward projections 2 and downward projections 3 alternate with each other in the right-to-left and front-to-back directions of the metal sheet (S). The downward projections 3 are shown by oblique lines in Fig. 1. That is, each of the upward projections 2 is surrounded with the downward projections 3, and similarly, each of the downward projections 3 is surrounded with the upward projections 2. That is, the lower end 2a of each of the four faces of each upward projection 2 is formed as the upper end 3a of each of the four faces of each adjacent downward projection 3. No horizontal plane is formed along a reference line (L.) That is, the metal sheet (S) consists of the quadrangular pyramidal upward projections 2 (hereinafter referred to as merely upward projections 2) and the quadrangular pyramidal downward projections 3 (hereinafter referred to as merely downward projections 3) formed thereon. Needless to say, it is possible to space the upward projections 2 and the downward projection 3 at certain intervals and form a horizontal plane along the reference line (L).

Because the upward projections 2 and the downward projections 3 are formed by deforming the porous metal sheet 1, needless to say, the inclined four faces of the upward projections 2 and the downward projections 3 have a large number of pores 2b and 3b formed thereon. Because the open area percentage of the porous metal sheet 1 is set 10% - 99% in the present invention, the pores 2b and 3b are formed on the face of the upward projections 2 and the downward projections 3 at the percentage of 10% - 99%. Preferably, the open area percentage of the porous metal sheet 1 is in the range of 50% - 90%. In the first embodiment, the open area percentage thereof is set to 70%. In the drawings, the true number of pores 2b and 3b is not shown.

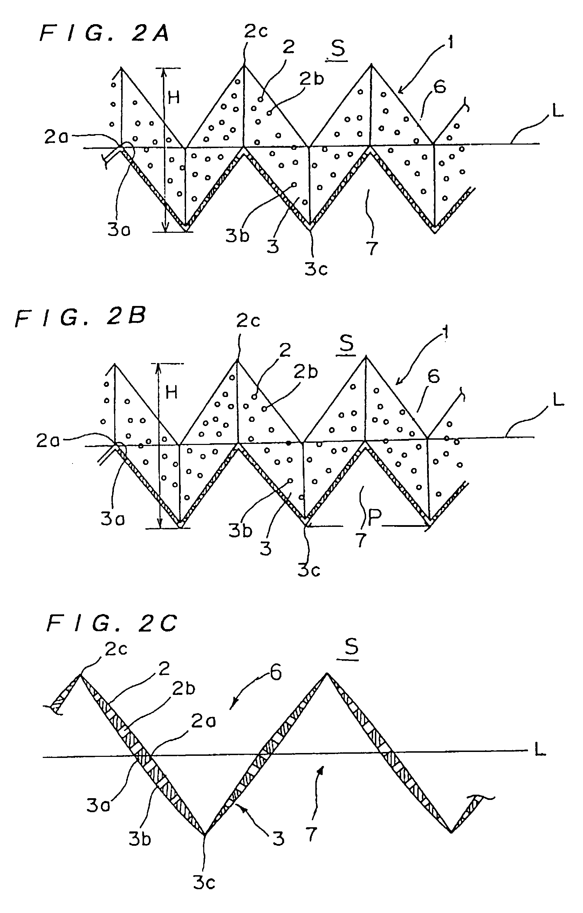

The thickness of the porous metal sheet 1 is in a range of 10µm - 100µm. As shown in Figs. 2 (A), 2 (B), and 2 (C), the distance (H) between the apex of the upward projection 2 and that of the downward projection 3 is set to a range of 0.05mm - 5.0mm. The height of the upward projection 2 and that of the downward projection 3 are set to 1/2H, namely, 0.025mm - 2.5mm. The sectional configuration of the upward projection 2 and that of the downward projection 3 are identical to each other. The pitch between the apexes of the adjacent upward projections 2 and that between the apexes of the adjacent the downward projections 3 are set to 50µm or more. The thickness of the metal sheet (S) at the reference line (L) at which the upward projections 2 and the downward projections 3 are continuous with each other is set to 10µm - 100µm which is almost equal to that of the porous metal material 1. The thickness of the metal sheet (S) becomes gradually smaller from a portion thereof corresponding to the reference line (L) toward the apex 2c of the upward projection 2 and the apex 3c of the downward projection 3. The thickness of the metal sheet (S) at its apexes 2c and 3c is set to 5µm - 80µm.

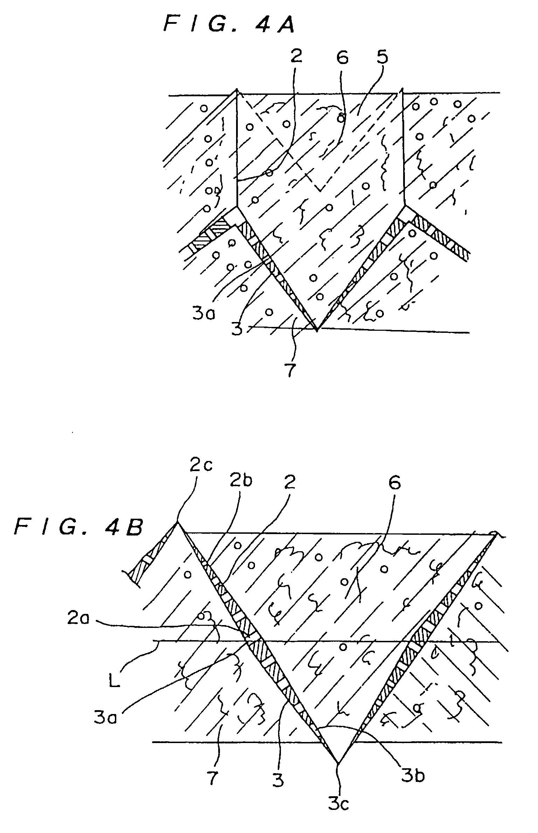

Referring to Figs. 3A and 3B, the upward projections 2 and the downward projections 3 of the metal sheet (S) are formed by passing the porous metal base sheet having an open area percentage of 10% - 99% between a pair of rollers 10A and 10B on which concave and convex portions are formed. It is possible to form the upward projections 2 and the downward projections 3 by means of a pair of press dies in concave and convex portions are formed, instead of the rollers 10A and 10B.

As shown in Figs. 4A and 4B, in using the metal sheet (S) comprising the porous metal sheet 1 having the upward projections 2 and the downward projections 3 formed thereon as a battery electrode, a paste of active substance 5 is applied to the upper and lower surfaces of the porous metal sheet 1. As shown in Figs. 4A and 4B, the active substance 5 is applied to a plurality of upward-open active substance-application spaces 6 each formed of one upward projection 2 and one face of each of four downward projections 3 continuous with the lower end 2a of the each of the four faces of the upward projection 2 and to a plurality of downward-open active substance-application spaces 7 each formed of one downward projection 3 and one face of each of four upward projections 2 continuous with the upper end 3a of each of the four faces of the downward projection 3. The active substance 5 is applied to the vicinity of the upper end (apexes of upward projections 2) of the upward-open active substance-application spaces 6 and to the vicinity of the lower end (apexes of downward projections 3) of the downward-open active substance-application spaces 7. The active substance 5 is applied to the upward-open active substance-application space 6 and the downward-open active substance-application space 7 to an extent almost equal to the apparent height (H) (see Fig. 2) of the metal sheet (S). The upward projection 2 and the downward projection 3 of the porous metal sheet 1 allow the active substance 5 to be applied to the porous metal sheet 1 in a great thickness. Further, because the upward-open and downward-open active substance-application spaces 6 and 7 are concave, they hold the active substance 5 therein very firmly, thus preventing the active substance 5 from being separated or removed therefrom.

The active substance 5 applied to the spaces 6 and 7 is further applied to a large number of pores 2b and 3b, formed on the upward projection 2 and the downward projection 3. Thus, the active substance 5 is held very firmly in the upward-open and downward-open active substance-application spaces 6 and 7. When the volume of the upward-open and downward-open active substance-application spaces 6 and 7 is large, preferably, an electrically conductive substance may be contained in the active substance 5 to increase its electrical conductivity.

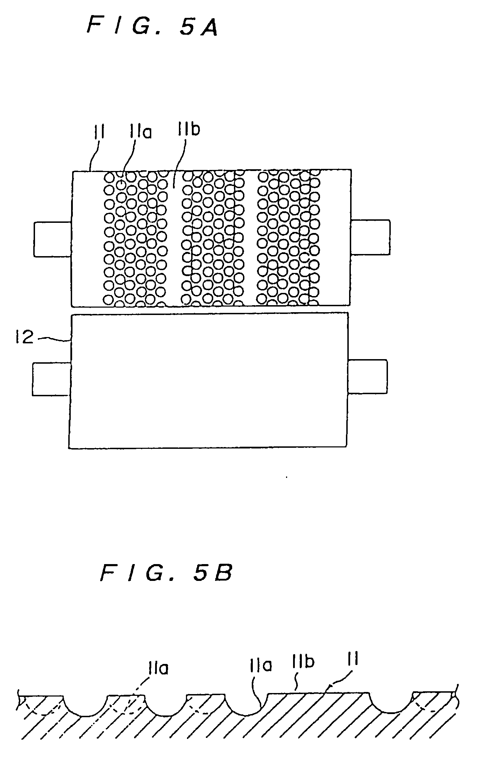

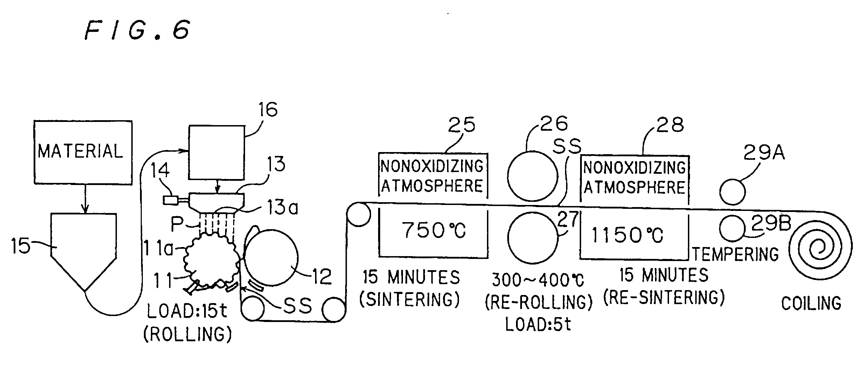

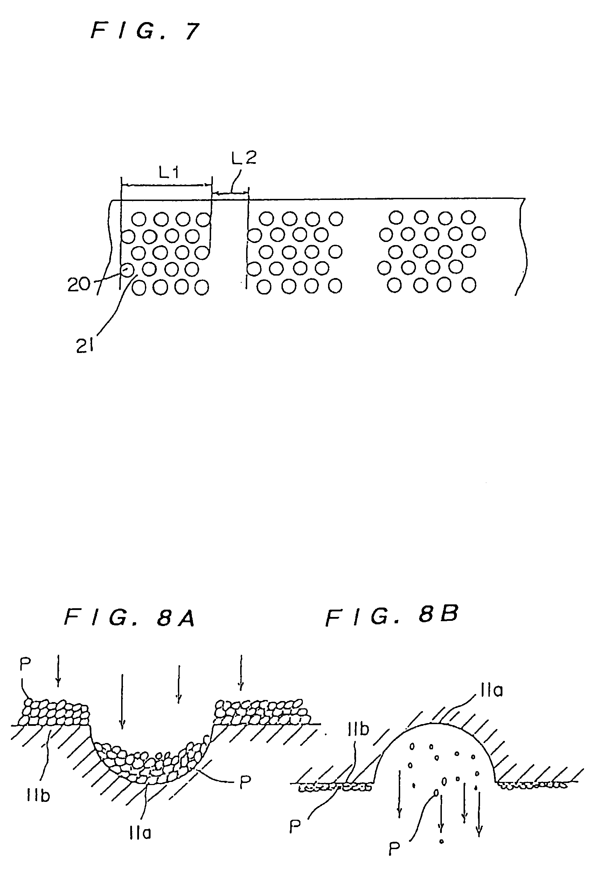

The porous metal sheet 1 consists of metal powders rolled by a roller into a sheet and has pores which look like as if they were formed by punching a metal sheet. Referring to Figs. 5A and 5B and 6, the porous metal sheet 1 is manufactured by an apparatus comprising a pair of rollers including a pattern roller 11 and a roller 12 having a flat surface. The pattern roller 11 has semispherical concavities 11a formed therein in its right-to-left and front-to-back directions at predetermined intervals.

As shown in Fig. 6, a sieve 13 positioned above the pattern roller 11 and having a mesh portion 13a formed on the bottom surface thereof is vibrated in a right-to-left direction in Fig. 6, by a vibrating device 14 supporting the sieve 13 to spread metal powders (P) over the upper surface of the pattern roller 11. A predetermined amount of the metal powders (P) is supplied to the sieve 13 from a hopper 15 through a feeder 16 which feeds a predetermined quantity of the metal powders (P) per unit time Nickel powders in the shape of spikes and having diameters of 2-7 µm are fed from the hopper 15 via the feeder 16, and the sieve 13 and are spread directly over the upper surface of the pattern roller 11. As shown in Fig. 8A, the metal powders (P) which have dropped into the concavities 11a are prevented from accumulating to the level of the peripheral surface 11b of the pattern roller 11, they do not project from the peripheral surface 11b. The metal powders (P) accumulate to a predetermined thickness on the peripheral surface 11b to form a layer having a predetermined thickness. With the rotation of the pattern roller 11 and the flat roller 12 in this state, at the portion of contact between the pattern roller 11 and the flat roller 12, the metal powders (P) on the peripheral surface 11b of the pattern roller 11 are compressed by the flat roller 12 at a load of 150 kN (15 tons) thus being rolled as a thin compressed metal base sheet 1'. As shown in Fig. 8B, because the metal powders (P) accommodated inside the concavities 11a do not project from the peripheral surface 11b of the pattern roller 11, they are not compressed by the flat roller 12. With the rotation of the pattern roller 11, they pass the contact point, thus dropping from the concavities 11a when the concavities 11a turn downward. With the continuous rotation of the pattern roller 11 and the flat roller 12, the compressed metal base sheet 1' thus formed at the contact point comes out of contact with the peripheral surface 11b of the pattern roller 11 and that of the flat roller 12, thus being fed downstream, as shown in Fig. 8B.

As shown in Fig. 7, the compressed metal base sheet 1', which is formed by rolling the metal powders, has a plurality of porous sheet sections and a plurality of belt-shaped lead sections consisting of solid metal. The width of the porous sheet section is L1 and that of the sloid metal sheet section is L2. Each of the porous sheet sections comprises pores 20 corresponding to the concavities 11a of the pattern roller 11; and a portion 21 corresponding to the peripheral surface 11b of the pattern roller 11 and surrounding the pores 20. After the above-described process, as shown in Fig. 6, the metal base sheet 1' is continuously fed to a sintering oven 25 in which it is sintered in a nonoxidizing atmosphere at 750°C for about 15 minutes. After the metal base sheet 1' is sintered, it, is rolled as follows: It is passed through a pair of flat rollers 26 and 27 heated to 300°C - 400°C by applying a load of 50 kN (five tons) thereto to roll it again. Then, the metal base sheet 1' is continuously fed into a sintering oven 28 to sinter it again in a nonoxidizing atmosphere at 1,150°C for about 15 minutes. Thereafter, it, is passed between a pair of tempering rollers 29A and 28B to level the thickness of the metal base sheet 1'. In this manner, the porous metal base sheet 1' having a predetermined thickness is obtained. Then, the porous metal sheet 1' is wound around a roller as a coil. While the metal base sheet 1' is being rewound from the coil, it is passed through the rollers 10A and 10B having concave and convex portions shown in Fig. 3 or through a pair of dies to form the upward projection 2 and the downward projection 3.

The thickness, the open area percentage, and the area of total pores of the porous metal sheet 1 formed of metal powders by using the pattern roller can be set as desired. Further, the porous metal sheet 1 has a high electrical conductivity, because the porous metal sheet 1 is made of only metal..

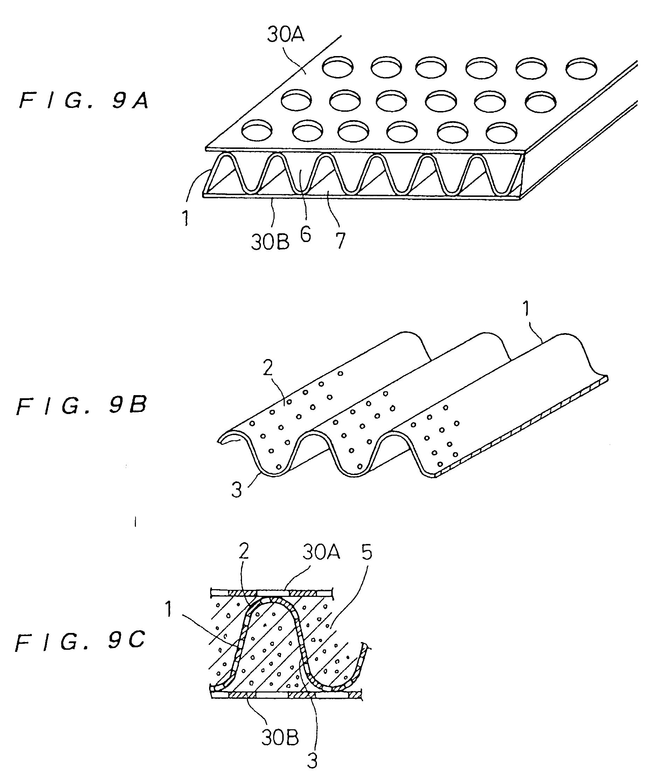

Figs. 9 (A), 9 (B), and 9 (C) show the second embodiment of the present invention in which a flat porous metal material 30A and a flat porous metal sheet member 30B are integrated with the porous metal sheet 1, by inductively heating the apexes of the upward projections 2 of the porous metal sheet 1, the portion of the porous metal sheet member 30A in contact with the apexes, the apexes of the downward projections 3 of the porous metal sheet 1, and the portion of the porous metal sheet member 30B in contact with the apexes.

As described above, in the second embodiment, the metal sheet is S in the shape of a corrugated fiberboard. The upward projections 2 and the downward projections 3 of the porous metal sheet 1 sandwiched between the porous metal sheet members 30A and 30B are wave-shaped and continuous in the waved direction, unlike the first embodiment. Needless to say, the upward projections 2 and the downward projections 3 may be quadrangular pyramidal similarly to the first embodiment or conic.

The porous metal sheet 1 sandwiched between the porous metal sheet members 30A and 30B is formed by deforming or bending a nickel foil in which pores have been formed. The flat porous metal sheet members 30A and 30B are formed by rolling metal powders by a pair of rollers, similarly to the first embodiment. That is, the flat metal sheet formed by means of the roller is used as the porous metal sheet members 30A and 30B without forming convex and concave portions thereon.

In the second embodiment in which the metal sheet is in the shape of a corrugated fiberboard, the upward-open and downward-open active substance-application spaces 6 and 7 formed of the upward projections 2 and the downward projections 3 are closed with the porous metal sheet members 30A and 30B. Thus, an active substance applied to the upward-open and downward-open active substance-application spaces 6 and 7 can be held therein very firmly. The porous metal sheet members 30A and 30B allow the active substance to be applied downward and upward, respectively to the upward-open active substance-application spaces 6 and 7 through the pores thereof. Preferably, the open area percentage of the porous metal sheet members 30A and 30B is not less than 40% to prevent an inefficient application of the active substance to the porous metal sheet members 30A and 30B and not more than 60% to hold the active substance in the upward-open active substance-application spaces 6 and 7 firmly.

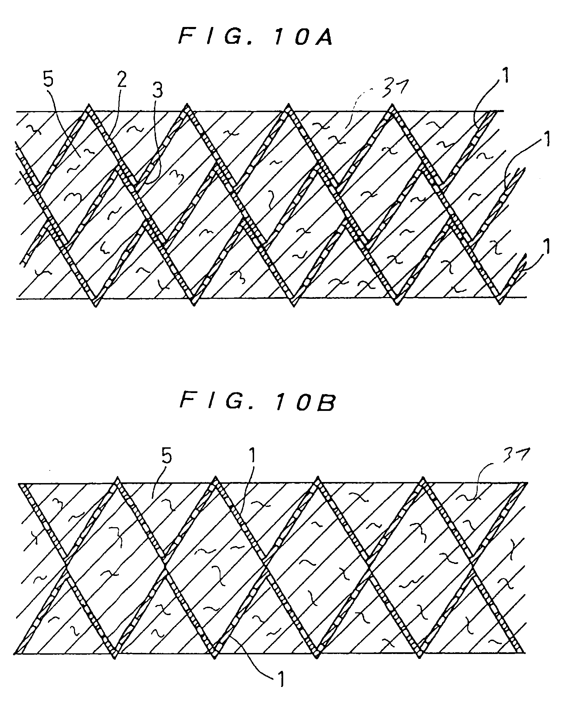

Figs. 10A and 10B show the third embodiment of the present invention in which three porous metal sheets 1 are used. On each of the three porous metal sheets 1, there are formed quadrangular pyramidal upward projections 2 similar to those of the first embodiment and quadrangular pyramidal downward projections 3 also similar to those of the first embodiment. They are piled one upon another and fused by inductive heating to integrate them with one another. The number of the porous metal sheets 1 is not limited to three, but any desired number thereof may be selectively used to adjust an electrode substrate of a battery to a required thickness.

Similarly to the first embodiment, the porous metal sheets 1 to be piled one upon another are formed by a pair of rollers to roll metal powders into a sheet. The upward projections 2 and the downward projections 3 are formed on the porous metal base sheets 1' by embossing. The upward projections 2 and the downward projections 3 are spaced at intervals of 0.7mm, respectively and the sizes thereof are identical to each other. Thus, as shown in Fig. 10A, when the upper and lower porous metal base sheets 1' are piled one upon another, the downward apex of the upper one and the upward apex of the lower one are not coincident with each other but the face of the upper projection 2 of the lower one and that of the downward projection 3 of the upper one are in contact with each other, thus forming an active substance-application space 31.

As shown in Fig. 10B, when the apex of the upward projection 2 of the lower porous metal sheet 1 is coincident with that of the downward projection 3 of the upper porous metal material 1, the volume of the active substance-application space 31 can be maximized.

In the above-described construction, the active substance can be applied downward to the upper porous metal sheet 1 and upward to the lower one through pores thereof to fill the active substance into each active substance-application space 31 surrounded with the upward projections 2 and the downward projections 3.

In the above-described construction, except the upper and lower spaces surrounded with the upward projections 2 and the downward projections 3 and open to the outside, each active substance-application space 31 is closed with the upward projection 2 and the downward projection 3, thus holding the active substance therein firmly. In addition, the volume of the active substance-application space 31 can be increased as desired by piling up a required number of the porous metal materials 1 one upon another to increase the application amount of the active substance.

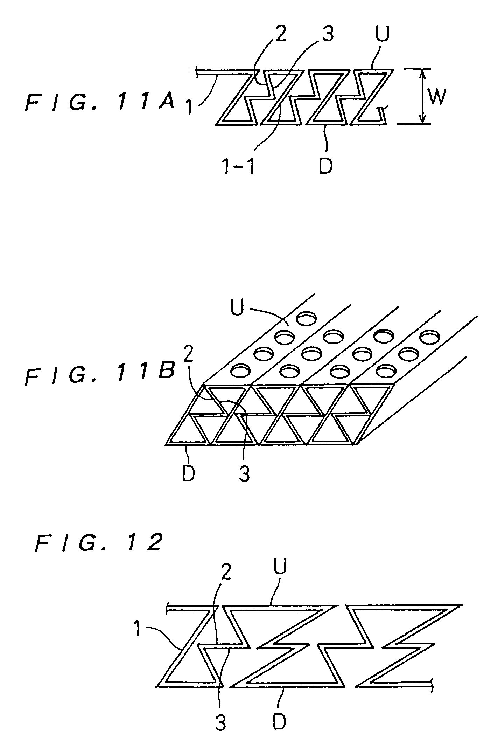

Figs. 11A and 11B show the metal sheet according to the fourth embodiment of the present invention. In order to form a thick porous metal sheet, the porous metal sheet 1 having the upward projections 2 and the downward projections 3 formed thereon is bent upward and downward alternately in such a manner that the upward projections 2 and the downward projections 3 are arranged vertically and the upward projections 2 and the downward projections 3 are directed in the right-to-left direction in Fig. 11. An active substance is applied to spaces surrounded with the upward projections 2 and the downward projections 3.

More specifically, the porous metal base sheet 1 is bent to form two rows of the upward projections 2 and the downward projections 3 at a predetermined interval. Then, a portion 1-1 of the porous metal base sheet 1' on which the upward projections 2 and the downward projections 3 have not been formed is set horizontally to form a lower side surface (D) of the porous metal base sheet 1'. Then, a portion of the porous metal material 1 on which the upward projections 2 and the downward projections 3 have been formed is bent upward, with the upward projections 2 and the downward projections 3 projecting leftward in Fig. 11. Thereafter, the portion 1-1 of the porous metal base sheet 1 is bent horizontally to form the upper side surface (U) of the porous metal material 1 and then, bent downward and then horizontally to form the lower side surface (D). These operations are repeatedly performed to form the three-dimensional metal sheet having a thickness (W) as shown in Fig. 11 (A).

In this construction, the thickness of the metal sheet can be adjusted to a desired one by changing the height thereof. Further, each upward-open and downward-open portion of each projection 2,3 is closed with the portion 1-1 set horizontally. Thus, the active substance applied to each space can be held therein firmly.

Fig. 12 shows a modification of the fourth embodiment in which both portions 1-1 bending upward and downward have the upward projections 2 and the downward projections 3.

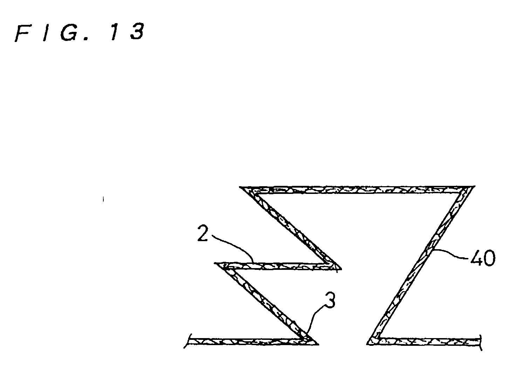

Fig. 13 also shows a modification of the fourth embodiment in which instead of the punched metal base sheet, a nonwoven porous metal base sheet 40 formed of metal fibers and having a large open area percentage is used. That is, the upward projections 2 and the downward projections 3 formed on the nonwoven porous metal base sheet 40 are bent upward and downward alternately to form a three-dimensional metal sheet having a required thickness, similarly to the third embodiment.

The porous metal base sheet to be used in the first through fourth embodiments are not limited to the above-described ones, but the following ones are preferably used by forming the upward and downward projections thereon.
(1) A metal plate or a metal foil having a large number of pores formed thereon
(2) A metal mesh and a metal screen
(3) A porous metal sheet formed by plating, evaporating, applying metal powder or spreading melted metal to a three-dimensional reticulate foamed resin sheet, porous fibrous resin sheet, a mesh resin sheet or a piled sheet consisting of one or more kinds of those resin sheets, then baking for resin removing and sintering.
(4) A porous metal sheet consisting of metal fibers

The pore to be formed in the porous metal sheet is shaped as desired. For example, it is punched pore-shaped, reticulate, honeycomb-shaped, lath-shaped, lattice-shaped, expanded-shaped, screen-shaped or lace-shaped. The open area percentage of the porous metal sheet is set to 10% to 99%.

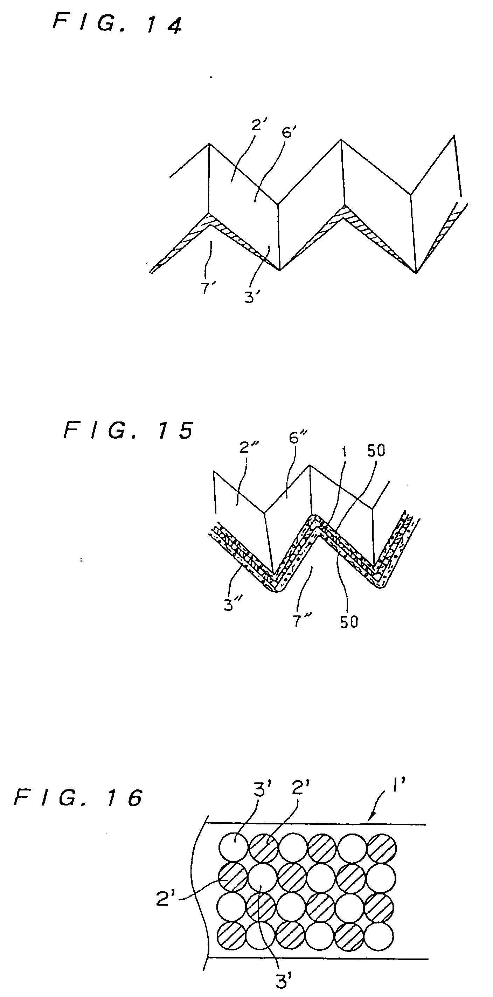

Fig. 14 shows the metal sheet according to the fifth embodiment of the present invention in which a solid metal foil, namely, the solid metal having no pores formed thereon is passed between a pair of rollers or a pair of dies having concave and convex portions formed thereon to deform the metal foil into quadrangular pyramidal upward projections 2' and quadrangular pyramidal downward projections 3'. Similarly to the first embodiment, an active substance is applied to the upward projection 2' and the downward projection 3' of the metal sheet to fill the active substance into active substance-application spaces 6' and 7' surrounded by the projections to use the metal sheet as an electrode substrate of a battery. The substrate electrode formed of the solid metal sheet can be preferably used for a lithium secondary battery.

Unlike the first through fifth embodiments, the upward and downward projections are not necessarily continuous with each other, but it is possible to space the upward and downward projections at a small interval from the reference plane (see Fig. 2) formed therebetween.

Fig. 15 shows the metal sheet according to the sixth embodiment of the present invention in which a foamed porous metal sheet member 50 is integrally piled on both surfaces of the porous metal sheet 1 same as that of the first embodiment. Similarly to the first through fifth embodiments, the porous metal base sheet integrated with the foamed porous metal sheet member 50 is passed through a pair of rollers or a pair of dies having concave and convex portions formed thereon to form upward projections 2'' and downward projections 3'' thereon. An active substance 5 is applied to the upward projections 2'' and downward projections 3'' to fill the active substance 5 into active substance-application spaces 6'' and 7'' surrounded therewith.

Because the foamed porous metal sheet member 50 having three-dimensional pores formed thereon is integrally layered on both surfaces of the porous metal sheet 1, the active substance 5 is filled into three-dimensional pores of the foamed porous metal sheet member 50. Thus, the active substance can be prevented from being readily separated and dropped from the flat porous metal sheet 1.

Fig. 16 shows the metal sheet according to the seventh embodiment of the present invention in which conic upward projections 2' and conic downward projections 3' shown by oblique lines are formed on a solid metal sheet 1'. Similarly to the quadrangular pyramidal projections, an active substance can be held firmly in active substance-application spaces surrounded with the conic projections. Further, the apparent thickness of the metal sheet is allowed to be great. Therefore, a great amount of the active substance can be applied to the solid metal sheet 1'.

As apparent from the foregoing description, according to the metal sheet, of the present invention, to be used as the electrode substrate of a battery, the metal sheet to be used as the electrode substrate is not flat but has upward and downward projections formed thereon. Therefore, the apparent thickness of the metal sheet including the upward and downward projections is allowed to be 3 - 500 times as great as that of the conventional electrode substrate. Further, because an active substance is applied to the space surrounded with the upward and downward projections, the active substance can be prevented from being separated and dropped from the metal sheet and applied thereto in a great thickness. Thus, the thickness of the active substance applied to the metal sheet is greater than that applied to the conventional flat metal sheet, thus increasing electricity-collecting performance and enabling a rapid charging and discharging of the battery.

Further, because the active substance-application space is conic, quadrangular pyramidal or wave-shaped, the active substance can be held therein firmly. In addition, because a large number of pores is formed on the faces of the upward and downward projections, the active substance applied can be held reliably in the active substance-application space.

Further, the active substance can be held reliably in the space surrounded with upward and downward projections, because flat porous metal sheet members are placed on and under the porous metal base sheet having upward and downward projections formed thereon. Further, because the flat porous metal shoot members are placed on and under the porous metal sheet to hold the active substance firmly, the volume of the active substance-application space and the thickness of the electrode substrate can be increased by increasing the height of the upward and downward projections of the porous metal material sandwiched between the flat porous metal sheet members.

Further, each active substance-application space is closed with the upward and downward projections of the porous metal sheets piled one upon another, thus holding the active substance therein firmly. In addition, the thickness of the electrode substrate and the filling amount of the active substance can be readily increased by piling the porous metal sheets increasingly.

Furthermore, only one porous metal sheet having upward and downward projections formed thereon is bent to provide a three-dimensional electrode substrate having a desired thickness and large active substance-application spaces. In the constructions of the metal sheets described above, the active substance filled in the active substance-application space can be held therein firmly because the active substance-application space is surrounded with porous metal sheets. Further, the active substance can he prevented from being separated and dropped from the metal sheets and the electrode substrates comprising the metal sheets are allowed to have a great thickness.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A metal sheet to be used as an electrode substrate of a battery comprising a porous metal base sheet (1) which is deformed upward and downward at predetermined intervals with respect to a reference plane (L) to form a plurality of conic, quadrangular pyramidal or wave-shaped upward and downward projections (2, 3) having a large number of pores (2b, 3b) positioned on the faces thereof to use spaces surrounded by the upward and downward projections as active substance-application spaces (6, 7; 31).

2. The metal sheet according to claim 1, wherein a plurality of said porous metal sheets (1) is piled vertically one upon another, with apexes (2c, 3c) of the upward and downward projections uncoincident with each other to use spaces between porous metal sheets vertically adjacent to each other as active substance-application spaces (31).

3. The metal sheet according to claim 1 or 2, wherein an upper flat porous metal sheet member (30A) is placed on the apexes of the upward projections (2) of the porous metal sheet (1) and a lower flat porous metal sheet member (30B) is placed under the apexes of the downward projections (3) to use spaces between the porous metal sheet (1) and the upper and lower flat porous metal sheet members (30A, 30B) as active substance-application spaces (6, 7).

4. The metal sheet according to claim 1, wherein the porous metal base sheet (1) is bent upward and downward alternately, with the projections (2, 3) directed in a right-to-left direction to use spaces surrounded with the projections as active substance-application spaces (6, 7).

5. The metal sheet according to any one of claims 1 through 4, wherein the porous metal base sheet (1) on which the upward projections (2) and the downward projections (3) are formed consists of a single layer or a plurality of layers piled one upon another and has an open area percentage of 10 to 99%.

6. The metal sheet according to any one of claims 1 through 5, wherein the porous metal base sheet (1) is formed by rolling metal powders into a sheet.

7. The metal sheet according to any one of claims 1 through 6, wherein the porous metal base sheet (1) is formed of a metal plate or a metal foil having a large number of pores formed therein; a metal mesh, metal fiber or a metal screen; porous metal sheets formed by plating, evaporating, coating metal powder, applying melted metal powder or spreading metal to a three dimensional reticulate foamed resin sheet, porous fibrous resin sheet, a mesh resin sheet or a piled sheet consisting of one or more kinds of those resin sheet, then removing the resin and sintering.

8. The metal sheet according to any one of claims 1 through 7, wherein the porous metal base sheet has pores punched pore-shaped, reticulate, honeycomb-shaped, lath-shaped, lattice-shaped, expanded sheet-shaped, screen-shaped or lace-shaped.

9. A metal sheet to be used as an electrode substrate of a battery, comprising a solid metal base sheet (1) which is deformed upward and downward at predetermined intervals with respect to a reference plane to form a plurality of conic, quadrangular pyramidal or wave-shaped upward and downward projections (2', 3') to use spaces surrounded by the upward and downward projections as active substance-application spaces (6', 7').

10. The metal sheet according to to any one of claims 1 through 9, wherein a metal sheet (50) is layered on at least one of the two surfaces of the solid metal sheet which is used as a core material.

11. The metal sheet according to any one of claims 1 through 10, wherein substances to compose the metal sheet are selected from Ni, Al, Cu, Fe, Ag, Zn, Sn, Pb, Sb, Ti, In, V, Cr, Co, C, Ca, Mo, Au, P, W, Rh, Mn, B, Si, Ge, Se, Ln, Ga, Sh, Ir, and an alloy or a mixture of two or more of the substances.

12. The metal sheet according to any one of claims 1 through 11, wherein the upward and downward projections (2, 3) are continuous with each other; and the downward projections project from lower ends of the upward projections without forming a flat reference plane between the upward and downward projections.

13. The metal sheet according to any one of claims 1 through 12, wherein an apparent thickness thereof measured between the upper ends of the upward projections (2) and the lower ends of the downward projections (3) is 3 - 500 times as great as the thickness of the porous metal base sheet (1) or the solid metal base sheet.

14. The metal sheet according to claim 13, wherein the apparent thickness of the metal sheet Is in a range of 0.03 mm to 5.0 mm.

15. The metal sheet according to any one of claims 1 through 14, wherein each of the conic or quadrangular pyramidal upward and downward projections (2, 3) becomes thinner toward a leading end thereof, each of the upward projections is thickest at a reference side of the metal sheet at which the lower end thereof is located; and each of the downward projections is thickest at the reference side of the metal sheet at which the upper end thereof is located.

16. A battery electrode, comprising the metal sheet described in any one of claims 1 through 15, in which an active substance (5) is filled into the space (6, 7; 31) surrounded by the upward and downward projections.

17. The battery electrode according to claim 16, wherein the active substance contains an electrically conductive material.

18. A battery comprising the battery electrode according to claim 16 or 17.
